# EUROPEAN PATENT SPECIFICATION

(11) **EP 2 972 762 B1**
(45) Date of publication and mention of the grant of the patent: **08.11.2017**
(21) Application number: 14723571.7
(22) Date of filing: 14.03.2014
(51) Int. Cl.: G06F 3/147, G09F 3/20, G09F 9/30, G06F 3/14

(54) **CONTINUOUS DISPLAY SHELF EDGE LABEL DEVICE**
ETIKETTVORRICHTUNG MIT KONTINUIERLICHER ANZEIGE FÜR REGALKANTEN
DISPOSITIF D'ÉTIQUETAGE DE BORDURE DE RAYONNAGES EN CONTINU

(30) Priority: 15.03.2013 US 201313836680
(43) Date of publication of application: 20.01.2016
(73) Proprietor: RTC Industries, Inc., Rolling Meadows, IL 60008 (US)
(72) Inventor: JOHNSON, Bradley Thomas, Rolling Meadows, Illinois 60008 (US); SWAFFORD, John Wesley, Rolling Meadows, Illinois 60008 (US); LEMBKE, Michael Alvin, Rolling Meadows, Illinois 60008 (US); ERNEST, Joseph Christian, Rolling Meadows, Illinois 60008 (US)
(74) Representative: Bryers LLP
(86) International application number: PCT/US2014/029124
(87) International publication number: WO 2014/144631

(56) References cited:
- US-A- 5 537 312
- US-A1- 2005 108 098
- US-A1- 2006 279 527
- US-A1- 2008 164 310
- US-A1- 2011 175 732
- US-A1- 2012 004 769
- US-A1- 2012 120 327

## Description

### FIELD OF THE INVENTION

The present invention relates to apparatus comprising a display configured to be oriented along an edge of a shelf and configured to provide information about a product on the shelf.

### BACKGROUND

Retail businesses often are tasked with rapid changes in customer product interests and in implemented internal changes to handle the same. As new products become increasingly popular among customers, retailers are tasked with changing shelf edge labels of products in order to attract customers to other products, market specific products, or to update product information, such as pricing, as quickly as possible.

Electronic shelf edge label devices allow retailers to manually swap out one device representing one single product for another device representing another single product or even changing a device to provide different information on a single product or to change from outputting data on one single product for data on another single product. However, further improvements and innovations in the area of convenience for a retailer are desired.

US 2012/004769 A1 discloses an automated retail shelf (ARS) unit for vending product items in a retail environment. The automated retail shelf (ARS) unit comprises a product storage compartment, a dispensing mechanism, and a user interface section, and is configured to be fitted on, and supported by, a shelf. US 5,537,312, US 2008/0164310 A1 and US 2006/0279527 A1 disclose electronic display devices for use in providing labelling on shelving, in which the displays on the electronic display devices is controlled by a central computing system.

### SUMMARY OF THE INVENTION

According to a first aspect there is provided an apparatus according to claim 1.

According to a second aspect there is provided a method according to claim 11.

On a display configured to be oriented along an edge of a shelf of a retailer, a first user interface including first information about a first product on the shelf is provided. At least one second user interface including at least one second information about at least one second product on the shelf is provided on the display. An individual is permitted to edit a parameter of at least one of the first user interface and the at least one second user interface. The parameter may include at least one of: a size of the user interface on the display, a shape of the user interface on the display, and a location of the user interface on the display. The first information and the at least one second information may be outputted concurrently to the display.

### BRIEF DESCRIPTION OF THE DRAWINGS

Some features of the present invention are illustrated by way of example, in the figures of the accompanying drawings and in which like reference numerals refer to similar elements. However, the scope of the present invention is limited by the scope of the appended claims.
FIG. 1 illustrates an example block diagram of an apparatus for communicating and distributing content according to the invention.
FIGS. 2A-2B illustrates example block diagrams of systems for communicating and distributing content according to the invention.
FIG. 3 illustrates an example block diagram of an apparatus for communicating and distributing content according to the invention.
FIGS. 4A-4B illustrate an example of a changing continuous display according to the invention.
FIGS. 5A-5C illustrate example continuous displays with locking mechanism according to the invention.
FIGS. 5D-5F illustrates an example of a changing continuous display with locking mechanism user interface according to the invention.
FIGS. 6A-6B illustrate an example of a changing size of a user interface according to the invention.
FIGS. 7A-7B illustrate an example of a changing shape of a user interface according to the invention.
FIGS. 8A-8B illustrate an example of a changing location of user interfaces according to the invention.
FIG. 9 illustrates an example method of distributing content according to the invention.
FIG. 10 illustrates another example method of distributing content according to the invention.
FIG. 11 illustrates an example block diagram of a system for communicating and distributing content according to the invention.

### DETAILED DESCRIPTION

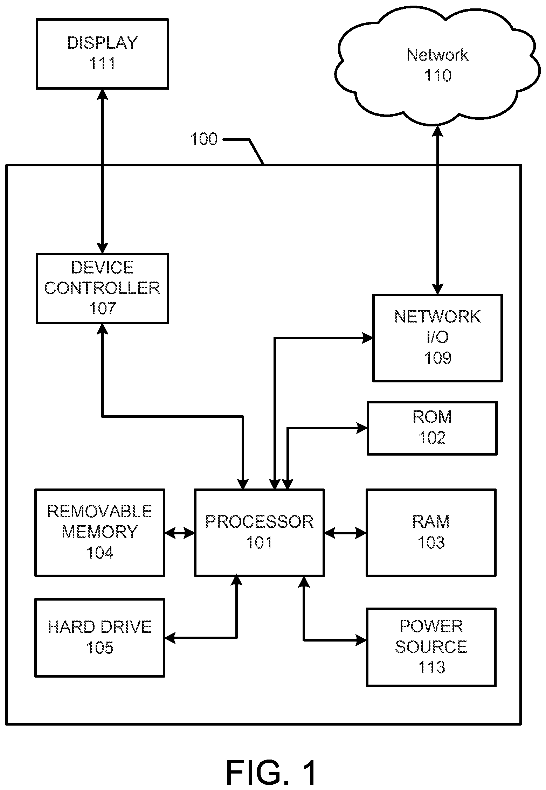

FIG. 1 illustrates an example block diagram of an apparatus for communicating and distributing content according to the invention. Network 110 may include networks of one or more access points, Internet devices, telephone networks, cellular telephone networks, fiber optic networks, local wireless networks (e.g., WiMAX), satellite networks, and any other desired network. The network 110 may include and/or function as a cloud computing infrastructure comprising various processing and/or memory devices (e.g., servers, databases, application providers, etc.).

The various devices described herein, such as a continuous display shelf edge label device, a server, a scanner, a database, a computer, and the like may be computing devices, and FIG. 1 illustrates general hardware elements that can be used to implement any of the various computing devices discussed herein. The computing device 100 may include one or more processors 101, which may execute instructions of a computer program to perform any of the features described herein. Processor 101 may comprise a customized digital integrated circuit such as an ASIC. However, in some applications, commercially available processors may be employed. The instructions may be stored in any type of non-transitory computer-readable medium or memory, to configure the operation of the processor 101. For example, instructions may be stored in a read-only memory (ROM) 102, random access memory (RAM) 103, hard drive 105, removable media 104, such as a Universal Serial Bus (USB) drive, compact disk (CD) or digital versatile disk (DVD), floppy disk drive, or any other desired electronic storage medium. Instructions may also be stored in an attached (or internal) hard drive 105. One or more of the memories 102, 103, 104, and/or 105 may include a more advanced operation environment such as an operating system for advanced functionality and adaptability.

One or more memories 102, 103, 104, and/or 105 may include a stored address location and display data location data. Address location may include an address that identifies the computing device 100. The address may uniquely identify the computing device 100. Display data location data may be used by processor 101 to format data to be displayed on display 111. This may include text data, graphics, dynamic content, and combinations. In accordance with at least one embodiment, the display data location data in a memory may is in accordance with a mark-up language such as HTML, XML, or the like. Although shown in FIG. 1 as being outside of computing device 100, display 111 also may be integrated into a same physical housing and/or structure as computing device 100. One or more components shown within computing device 100 similarly may be housed separately in another device and/or in another location from computing device 100.

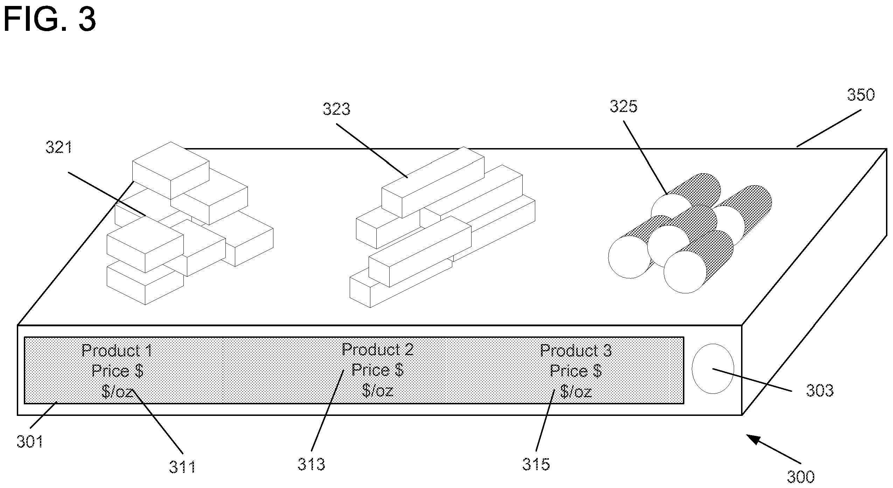

The computing device 100 may include one or more output devices, such as a display 111, and may include one or more output device controllers 107, such as a video processor. There may also be one or more user input devices (not shown), such as a remote control, keyboard, mouse, touch screen, microphone, etc. In another embodiment, input/output functions with a user may occur through display 111 where display 111 may be configured to allow for touch screen input in order to see additional output on the display 111. As shown illustratively in the examples of FIGS. 3-8B, display 111 may be configured to be oriented along an entire edge of a shelf of a retailer. This area of a shelf often includes paper labels that identify the product being sold above it and possibly additional information, such as price, cost/oz., and the like. Electronic shelf labels allow for a similar concept as a paper label, but with an individual computing device with a display screen for each product. Such electronic shelf label devices provide information regarding the single product being sold above it and possibly additional information, such as price, cost/oz., and the like and may include additional output such as video. However, display 111 of FIG. 1 is configured to output at least two user interfaces that correlate to two different products that a retailer may be offering for sale.

Display 111, in operation with device controller 107 and/or processor 101, may be configured to receive swipes across its surface by an individual's finger. The swipes of a finger may be correlated to an operational table for an action to be taken with respect to outputted user interface data. Display 111, in operation with device controller 107 and/or processor 101, may be configured to translate one or more finger swipes across its surface as one or more particular actions to be taken as described herein. Illustrative examples may include interpreting a movement of two fingers on the surface being moved away from each other as an expansion instruction, e.g., an input by an individual to expand the size of something, such as text size of the user interface, border design size of the user interface, frame size of the user interface, and the like. Other examples include interpreting the creation of an "X" by two finger movements over top of a user interface as a deletion instruction, e.g., an input by an individual to delete a user interface. Still other examples include interpreting a press and hold and movement of a finger from one area of the display to another area of the display as a movement instruction, e.g., an input by an individual to move a user interface from a current location on the display to another location on the display. Yet other illustrative examples include interpreting a double tap on the display surface by two finger taps as an addition instruction, e.g., an input by an individual to add a user interface to that area of the display that was tapped. Still further illustrative examples include interpreting a movement of two fingers on the surface being toward each other as a reduction instruction, e.g., an input by an individual to reduce the size of something, such as text size of the user interface, border design size of the user interface, frame size of the user interface, and the like. The examples described herein are merely illustrative and any of a number of additional input movements/taps across the surface of display 111 may be included herein for any of a number of other types of instructional requests by an individual to change a parameter of a user interface on display 111.

In other embodiments, display 111 may be configured to identify movements of a stylus or other pointing device against its surface in a similar manner as described herein with respect to an individual's fingers. A user and display 111 could interact with a stylus as the source of input by the user. As far as potential authorization of the individual, some manner of identification/authorization may be built into the stylus such that, if in contact with the display 111, the stylus could act as the mechanism for authenticating the individual to make changes to one or more parameters of the continuous display shelf edge label device as described herein. In still further embodiments, display 111 may be configured to identify movements of an individual's finger against its surface for entry of user interface information directly. A user could handwrite pricing information and/or other information about a particular product with her finger on display 111. Software may be included in a memory of the computing device to translate received finger swipes as corresponding to pricing information, product name information, and/or other product data information. In such examples, a worker can merely write in the current pricing for a product.

Similarly, display 111 may be configured to activate an electronic keyboard on screen and/or an electronic keypad. A digital alphanumeric user interface may be displayed on display 111 to allow an authorized individual to enter product information data and/or modify a user interface on display 111 in some other manner. For example, a worker could enter a pricing for a particular product by entering a number sequence on a displayed digital keypad. An entry of "$" character followed by "1", ".", "4", "9" may be translated by software within a memory of a computing device associated with display 111 as entry of a pricing label of $1.49 for a user interface for a particular product. In other scenarios, a worker may use alphanumeric characters to type in text for display in a user interface of a product, such as "On Sale Now!" In still other scenarios, special digital input options may be made available to an authorized individual for quick entry. A favorites list may prompt a worker to choose from a list where one entry may be "On Sale Now," a second entry may be "Sale Ends Tomorrow," while another entry may be "Buy 1, Get 1 Free!"

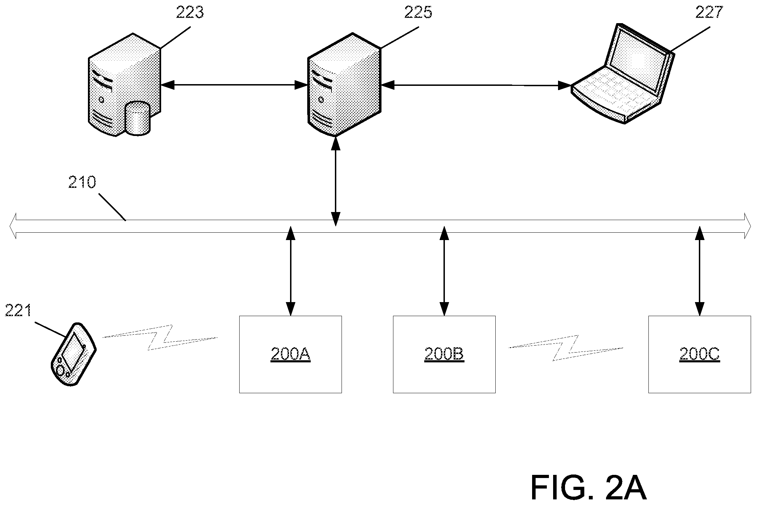

In yet other embodiments, an authorized individual may access display 111 in order to access data for a user interface from a remote location. In the example of FIG. 2A where data about products may be maintained in database 223, a worker could access display 111 about a particular user interface for a product. The worker could access the database through a visual file/folder system. Each component of a network system implementing the disclosure as described herein may be accessible through a continuous display shelf edge label device and may appear as some type of visual indicator on display 111. A worker could search and find the applicable component for the requested data (such as find an icon corresponding to the database 223) and access that component (launch the icon) to obtain the desired data. Any of a number of additional entry mechanisms may be utilized and the examples described herein are merely illustrative.

In additional embodiments, display 111 may be configured to include gesture-based interface capabilities as one manner to allow an authorized individual to edit/manipulate the user interfaces on the display 111. Display 111 may include appropriate hardware and/or software components to interpret gestures of an individual, whether a finger, a hand, and/or some other portion, via mathematical algorithms. These gestures may include one or more of the finger to surface examples described herein. In some of these embodiments, one or more cameras may be associated with and/or included with display 111 for capture of imaging and recognition of gestures. Although the majority of examples herein are for an individual interfacing with a display with her finger, it should be understood that such examples may be implemented similarly by way of gesture based technologies as described herein.

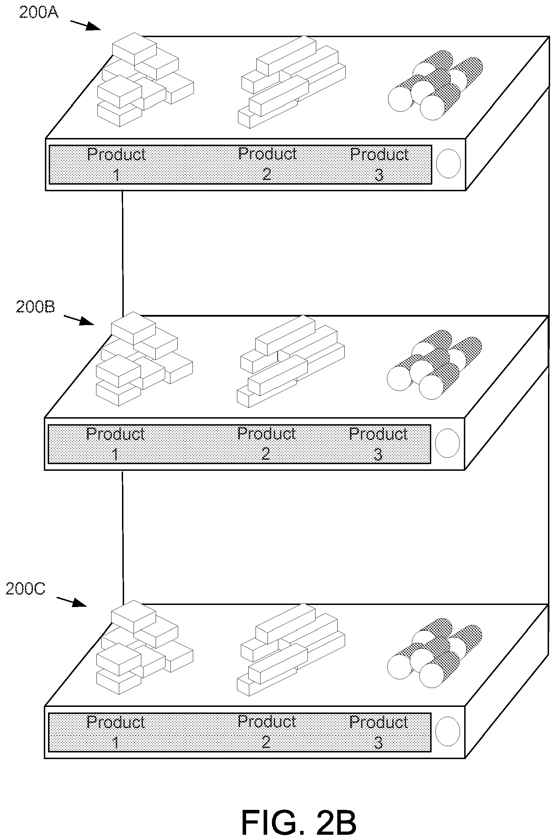

The computing device 100 may also include one or more network interfaces, such as input/output circuits 109 (such as a network interface circuit, a scanner interface circuit, and the like) to communicate with an external network 110. The input/output circuits 109 may be a wired interface, wireless interface, or a combination of the two. The input/output circuits 109 allows for communication between two computing devices, such as a continuous display shelf edge label devices and a scanner, e.g., 200 and 221 in FIG. 2 described herein, a continuous display shelf edge label devices and a remote user terminal, e.g., 200 and 227 in FIG. 2 described herein, and/or a continuous display shelf edge label devices and a database, e.g., 200 and 223 in FIG. 2 described herein.

Computing device 100 also may include a power source 113. Power source 113 allows for the computing device to operate the processor 101 and various other components. Power source 113 may include a dedicated battery source or external power source, such as an AC source connection. In other embodiments, power source 113 may be configured to operate by harvesting energy for operation from ambient light in a store where the computing device is located. Light energy may be captured by a variety of means for conversion, such as by photo sensors, solar photovoltaic panels, and photo diodes. Because the computing device 100 may operate without an external source connection, movement of the computing device from one physical location to another physical location can be accomplished without the need to reconnect to another external source. Further, because the computing device 100 may operate without an internal battery, the computing device does not need to be checked to ensure operation nor need to have a technician replace the internal battery.

FIGS. 2A-2B illustrate example block diagrams of systems for communicating and distributing content according to the invention. In the example of FIG. 2A, a plurality of computing devices, are shown operatively connected to a network 210. Network 210 may include network 110. Connected to network 210 are shown three continuous display shelf edge label devices 200A-200C. Continuous display shelf edge label devices 200A-200C may be computing device 100 and/or may include one or more of the components described therein. The three continuous display shelf edge label devices 200A-200C may be along an aisle of a retailer's store. The three continuous display shelf edge label devices 200A-200C may be positioned above each other as illustratively depicted in FIG. 2B.

Continuous display shelf edge label device 200A is shown as being in communication with a scanner 221. Although illustratively shown as a wireless communication, the transmission path between continuous display shelf edge label device 200A and scanner 221 may be a wired communication path, through network 210, and/or in some other manner. Scanner 221 may interact with continuous display shelf edge label device 200A through a communication interface, such as input/output circuits 109. Continuous display shelf edge label device 200A may be configured to receive data representative of information about a product on a shelf where the continuous display shelf edge label device 200A is located. An authorized individual, such as a worker for the retailer, may desire to update pricing data currently being displayed about a product on the shelf. By interfacing with the scanner 221, the price data for a particular product may be received electronically by the continuous display shelf edge label device 200A. Illustrative manners for transmission of such data include coding data for wireless transmission and forwarding the data wirelessly to the continuous display shelf edge label device 200A. In one example, an individual may type in a price at scanner 221 and data representative of the price may be sent wirelessly to the continuous display shelf edge label device 200A. The continuous display shelf edge label device 200A may then update a user interface for a product corresponding to the price data as described herein.

Continuous display shelf edge label devices 200B and 200C are shown as being in communication with each other. Although illustratively shown as a wireless communication, the transmission path between continuous display shelf edge label devices 200B and 200C may be a wired communication path, through network 210, and/or in some other manner. Continuous display shelf edge label device 200B may interact with continuous display shelf edge label device 200C through a communication interface, such as input/output circuits 109. Continuous display shelf edge label device 200B may be configured to receive data representative of information about a product on a shelf where the continuous display shelf edge label device 200B is located. An authorized individual, such as a worker for the retailer, may desire to update pricing data currently being displayed about a product on the shelf. By interfacing with the continuous display shelf edge label device 200C, the price data for a particular product may be received electronically by the continuous display shelf edge label device 200B. Such an interface may be the worker swiping her finger across the display surface of the continuous display shelf edge label device 200C to initiate a movement instruction to have a user interface from continuous display shelf edge label device 200C be transferred to continuous display shelf edge label device 200B. In one example, the worker may press and hold a user interface on continuous display shelf edge label device 200C and move her finger up quickly in a flicking motion. Such a motion may be interpreted by the system to transfer the flicked user interface to the next shelf edge up. As such, because continuous display shelf edge label device 200B is on the next shelf edge above continuous display shelf edge label device 200C, the flicked user interface can be added to the continuous display shelf edge label device 200B. Illustrative manners for transmission of such data include coding data for wired transmission and forwarding the data to the continuous display shelf edge label device 200B.

Aspects of the interaction between a worker located near a shelf with a scanner 221 may be similarly implemented between a worker located remote from such a shelf. User terminal device 227 is shown operatively connected to continuous display shelf edge label devices 200A-200C through network 210 and a main hub 225. Main hub 225 may be some type of central processing server configured to accommodate transmission of communications between various backend components of a retailer's network, such as user terminals 227 and a database 223 and from a backend to a storefront end, such as to continuous display shelf edge label devices 200A-200C through network 210. Main hub 225, user terminal 227, and/or database 223 may include one or more components of the computing device 100 illustrated in FIG. 1.

A worker at user terminal 227 may update pricing data, and/or other data, about a particular product on a particular shelf by accessing the continuous display shelf edge label device associated with that product. User terminal 227 may access database 223 for current product information for potential display and/or scheduled display. Instructions may be sent from user terminal 227 on such product information to the appropriate continuous display shelf edge label device. In another example, continuous display shelf edge label devices 200A-200C may access database 223 to obtain current product information data for respective user interfaces on the continuous display shelf edge label devices. In one such example, database 223 may be periodically updating with pricing changes, such as by a worker through user terminal 227. Continuous display shelf edge label devices 200A-200C may periodically poll the database 223 to obtain current product information data and change user interfaces being displayed as needed. In still other embodiments, database 223, main hub 225, and/or user terminal 227 periodically may push current product information data to continuous display shelf edge label devices 200A-200C, either globally or specifically. The continuous display shelf edge label devices 200A-200C may receive such data and change user interfaces being displayed as needed.

FIG. 3 illustrates an example block diagram of an apparatus for communicating and distributing content according to one or more illustrative aspects of the invention. FIG. 3 illustrates a continuous display shelf edge label device 300, such as continuous display shelf edge label devices 200A-200C. In this example, continuous display shelf edge label device 300 includes a single display area 301 oriented along an entire edge of a shelf 350. Continuous display shelf edge label device 300 also is shown to include a locking mechanism 303 that allows an individual to change modes of operation of the continuous display shelf edge label device 300 as described herein. In one mode, an authorized individual may edit one or more user interfaces 311, 313, and 315 while in a second mode, the user interfaces 311, 313, and 315 may not be edited.

The single continuous display 301 is shown to include three separate user interfaces that provide information regarding three separate products being offered for sale on the shelf 350. In this example, shelf 350 holds a first product 321, a second product 323, and a third product 325. Single continuous display 301 includes three digital user interfaces, one for each respective product being offered for sale. User interface 311 provides information about first product 321 directly above the user interface 311. Similarly, user interfaces 313 and 315 provide information about second product 323 and third product 325, respectively, that are above the respective user interfaces 313, 315. Any of a number of types of information about a product may be displayed on the single continuous display 301, including graphics, text, animations, video, and/or combinations.

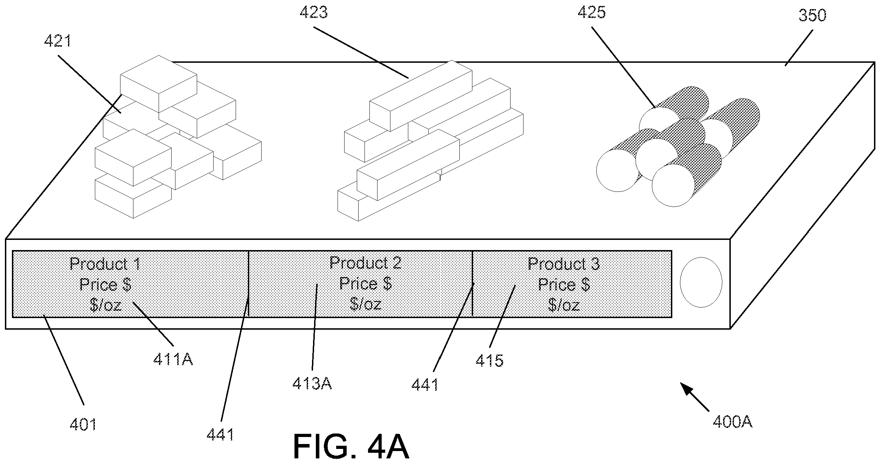

FIGS. 4A-4B illustrate an example of a changing continuous display according to one or more illustrative aspects of the invention. The transition from FIG. 4A to FIG. 4B illustrates one potential before and after operation of changing the user interfaces of a single continuous display. In FIG. 4A, a continuous display shelf edge label device 400 is shown for a shelf 350. Continuous shelf label device 400 may be one of continuous display shelf edge label devices 200A-200C and 300. Continuous display shelf edge label device 400 includes a single display area 401 oriented along an entire edge of shelf 350. The single continuous display 401 is shown to include three separate user interfaces that provide information regarding three separate products being offered for sale on the shelf 350.

For this illustrative example, a digital divider line 441 creates three separate visual frames for the three separate user interfaces 411A, 413A, and 415. Digital divider line is not a physical line that separates two displays, rather it is a digital line that creates the appearance of separation of the single continuous display 401 into multiple display areas. In this example, shelf 350 holds a first product 421, a second product 423, and a third product 425. Single continuous display 401 includes three digital user interfaces, one for each respective product being offered for sale. User interface 411A provides information about first product 421 directly above the user interface 411. User interface 413A provides information about second product 423 directly above user interface 413A, and user interface 415 provides information about third product 425 directly above user interface 415.

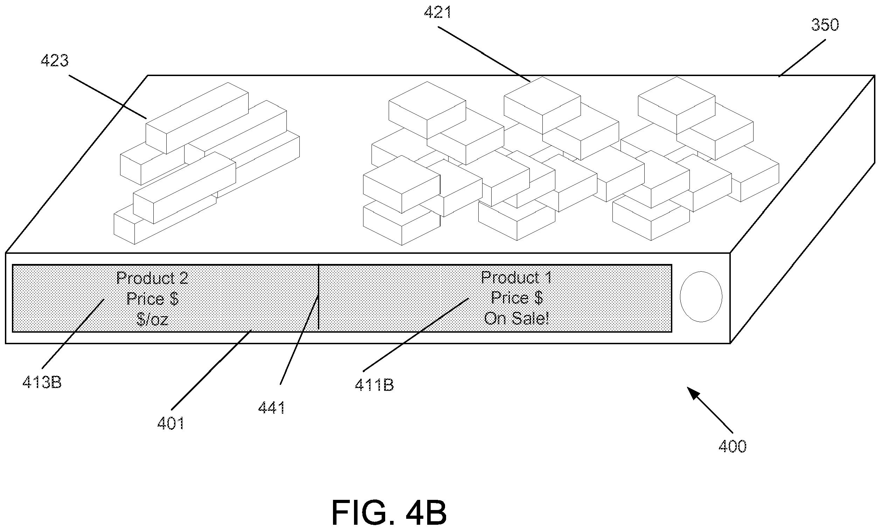

Transitioning to FIG. 4B, a worker may want to change the product layout for shelf 350 and in this example has removed the third product 425 from shelf 350 and created a larger area on shelf 350 for first product 421 to reside. Accordingly, the worker, as described herein, has changed the user interfaces for the single continuous display 401 in response. In this example, because the location of the user interfaces have been changed, user interface 411B is now shown to have moved toward the right side of the continuous display 401 since the first product 421 has been moved to the right side of shelf 350. Similarly, user interface 413B is shown to have been moved toward the left side of the continuous display 401 since the second product 423 has been moved to the left side of shelf 350. Because third product 425 is no longer being offered for sale on shelf 350, the user interface 415 for third product 425 has been deleted from continuous display 401. In this example of FIG. 4B, because there are only two user interfaces 411B and 413B shown on continuous display 401, only one digital divider line 441 is shown to frame out the two separate user interfaces 411B and 413B.

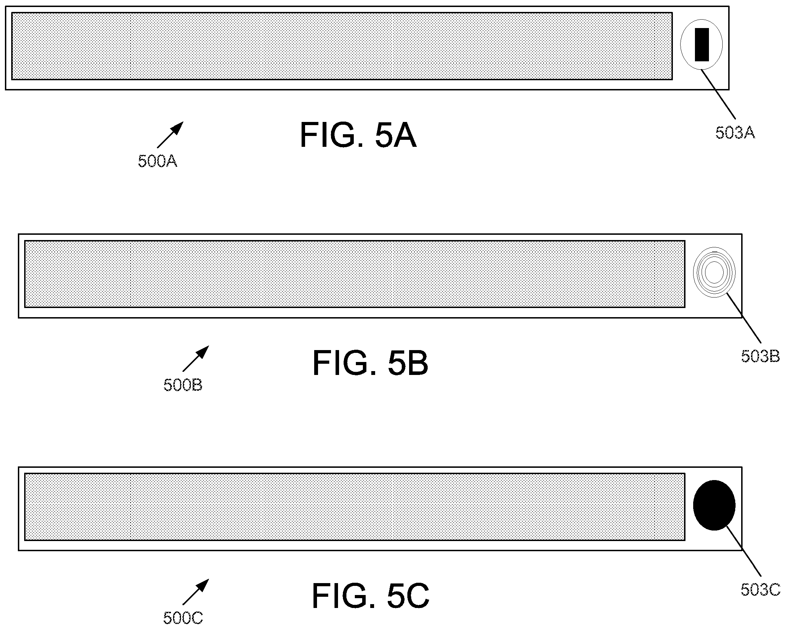

FIGS. 5A-5C illustrate example continuous displays with locking mechanism according to one or more illustrative aspects of the invention. As described herein, a locking mechanism may be included on a continuous display shelf edge label device in order to prevent an unauthorized individual from changing one or more parameters, such as displayed information, of a user interface displayed on the continuous display shelf edge label device. Any of a number of preventive manners may be included herein and the following are but some illustrative examples. In FIG. 5A, a manual device input 503A, such as for a physical key, may be included in a continuous display shelf edge label device 500A. By inserting a proper key, an authorized individual may change the mode of operation of the continuous display shelf edge label device from a display mode to a change mode.

A display mode may be a mode of operation where the continuous display shelf edge label device displays one or more interfaces on a single continuous display and may even allow a user, such as a customer, to access the single continuous display for additional information. Such an access may be by touch. However, in a display mode, such a customer cannot change a parameter of a user interface being displayed, such as the size of the user interface, the shape of the user interface, or the location of the user interface on the single continuous display. The customer can view and interact as allowed without having the ability to change parameters of the display area for the user interface. A change mode may be a mode of operation where the continuous display shelf edge label device displays one or more interfaces on a single continuous display and allows an authorized user, such as a worker, to change one or more parameters of the single continuous display. Such an access may be by touch as described herein. In a change mode, the worker can change a parameter of a user interface being displayed, such as the size of the user interface, the shape of the user interface, or the location of the user interface on the single continuous display. As such, a worker easily can modify any aspect of a user interface corresponding to a product at the point of sale.

FIGS. 5B and 5C illustrate two other types of locking mechanisms. In FIG. 5B, a biometric scanner 503B, such as to scan prints of a finger, may be included in a continuous display shelf edge label device 500B. By pressing a finger against the biometric scanner 503B, an authorized individual may change the mode of operation of the continuous display shelf edge label device from a display mode to a change mode. In FIG. 5C, a near field communication (NFC) reader 503C, such as to scan NFC enabled access cards of workers, may be included in a continuous display shelf edge label device 500C. By pressing an NFC enabled access card against the NFC reader 503C, an authorized individual may change the mode of operation of the continuous display shelf edge label device from a display mode to a change mode.

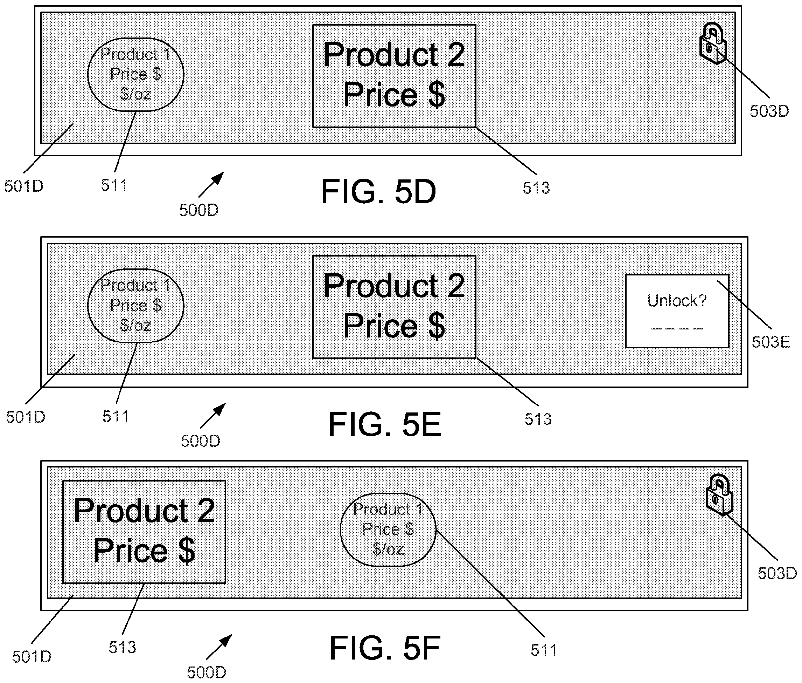

FIGS. 5D-5F illustrates an example of a changing continuous display with locking mechanism user interface according to one or more illustrative aspects of the invention. In the example of FIGS. 5D-5F, a locking mechanism is built into the continuous display shelf edge label device 500D. In this example, a worker will enter a code to change the mode of operation of the continuous display shelf edge label device 500D. As shown in FIG. 5D, a single continuous display 501D includes two user interfaces 511 and 513 for respective products. Also shown in FIG. 5D is a lock icon 503D. Accessing lock icon 503D allows an authorized individual to change modes of operation of continuous display shelf edge label device 500D. By tapping on lock icon 503D, the worker may be shown what is seen in FIG. 5E. In FIG. 5E, a new user interface 503E appears that prompts an individual for entry of a code to authorize the changing of the modes of operation. By inserting a proper code in FIG. 5E, an authorized individual may change the mode of operation of the continuous display shelf edge label device 500D from a display mode to a change mode.

If the individual does not enter a proper code, the continuous display shelf edge label device 500D may transition back to the appearance shown in FIG. 5D. However, if the individual does enter a proper code, the continuous display shelf edge label device 500D may change modes of operation to a change mode allowing the individual to change one or more parameters of one or more user interfaces for products. Following any changes, the individual does not enter a proper code, the continuous display shelf edge label device 500D may transition back to a display mode as shown in FIG. 5F. As shown, the individual has changed the location of user interface 511 and user interface 513 with respect to each other on the single continuous display 501D. Locking icon 503D is shown as well.

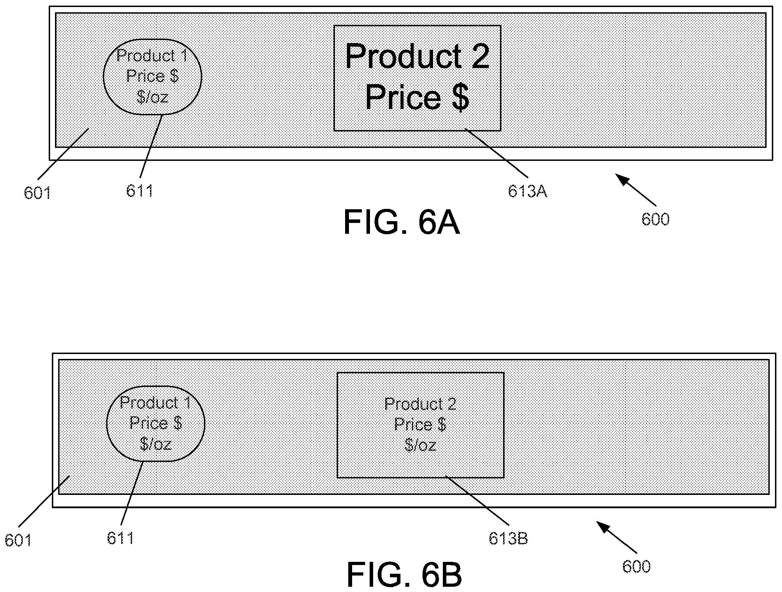

FIGS. 6A-6B illustrate an example of a changing size of a user interface according to one or more illustrative aspects of the invention. In this illustrative example, an authorized individual has accessed a change of mode request in the continuous display shelf edge label device 600. In this example, continuous display shelf edge label device 600 includes a single continuous display 601 oriented along an entire edge of a shelf. FIG. 6A may illustrate two user interfaces 611 and 613A prior to a change of a parameter of the user interface 613A. In this example, the shape of the border of each user interface 611 and 613A are different as well has the size of the text within the border. Through one or more of the operations described herein, FIG. 6B illustrates what the continuous display shelf edge label device 600 may resemble after a change operation to change the size of the user interface 613A. As shown in FIG. 6B, user interface 613B has the text within it reduced in size. Transitioning from FIG. 6A to FIG. 6B, an authorized individual has changed a parameter, the large size of text, of user interface 613A to the parameter, the smaller size of text, of user interface 613B.

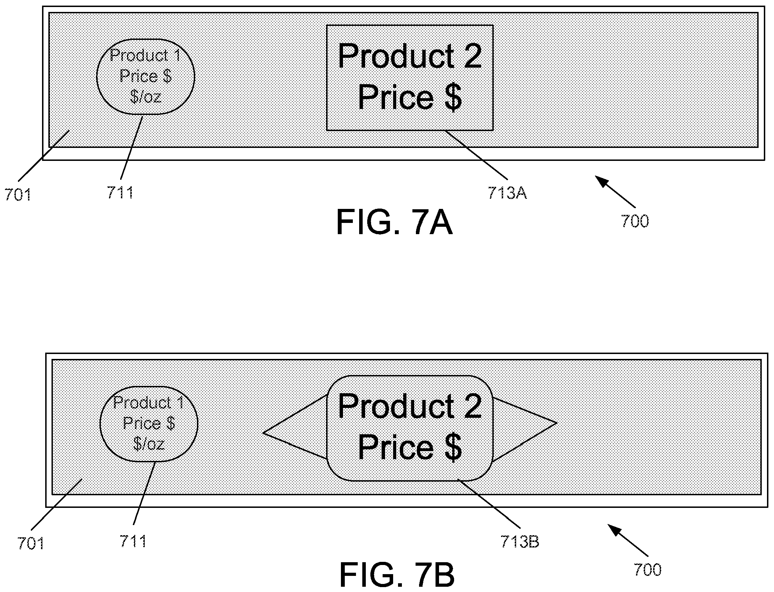

FIGS. 7A-7B illustrate an example of a changing shape of a user interface according to one or more illustrative aspects of the invention. In this illustrative example, an authorized individual has accessed a change of mode request in the continuous display shelf edge label device 700. In this example, continuous display shelf edge label device 700 includes a single continuous display 701 oriented along an entire edge of a shelf. FIG. 7A may illustrate two user interfaces 711 and 713A prior to a change of a parameter of the user interface 713A. In this example, the shape of the border of each user interface 711 and 713A are different as well has the size of the text within the border. Through one or more of the operations described herein, FIG. 7B illustrates what the continuous display shelf edge label device 700 may resemble after a change operation to change the shape of the border of user interface 713A. As shown in FIG. 7B, user interface 713B has the shape of the border of the user interface different in appearance. Transitioning from FIG. 7A to FIG.7B, an authorized individual has changed a parameter, the rectangular shape, of the border of user interface 713A to the parameter, the rounded edge cornered rectangle with pointed ends shape, of the border of user interface 713B.

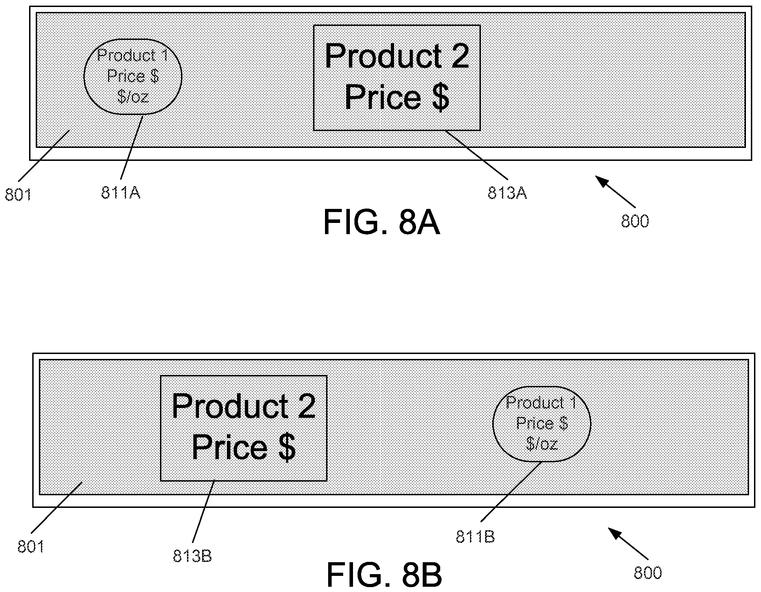

FIGS. 8A-8B illustrate an example of a changing location of user interfaces according to one or more illustrative aspects of the invention. In this illustrative example, an authorized individual has accessed a change of mode request in the continuous display shelf edge label device 800. In this example, continuous display shelf edge label device 800 includes a single continuous display 801 oriented along an entire edge of a shelf. FIG. 8A may illustrate two user interfaces 811A and 813A prior to a change of a parameter of the user interfaces 811A and 813A. In this example, the position of each user interface 811A and 813A within the single continuous display 801 are changed. Through one or more of the operations described herein, FIG. 8B illustrates what the continuous display shelf edge label device 800 may resemble after a change operation to change the position of the two user interfaces 811A and 813A. As shown in FIG. 8B, user interface 813B has changed positional orientation with respect to user interface 811B within the single continuous display 801. Transitioning from FIG. 8A to FIG. 8B, an authorized individual has changed two parameters, the positions of each of the user interfaces 811A and 813A to the two parameters, the positions of each of the user interfaces 811B and 813B.

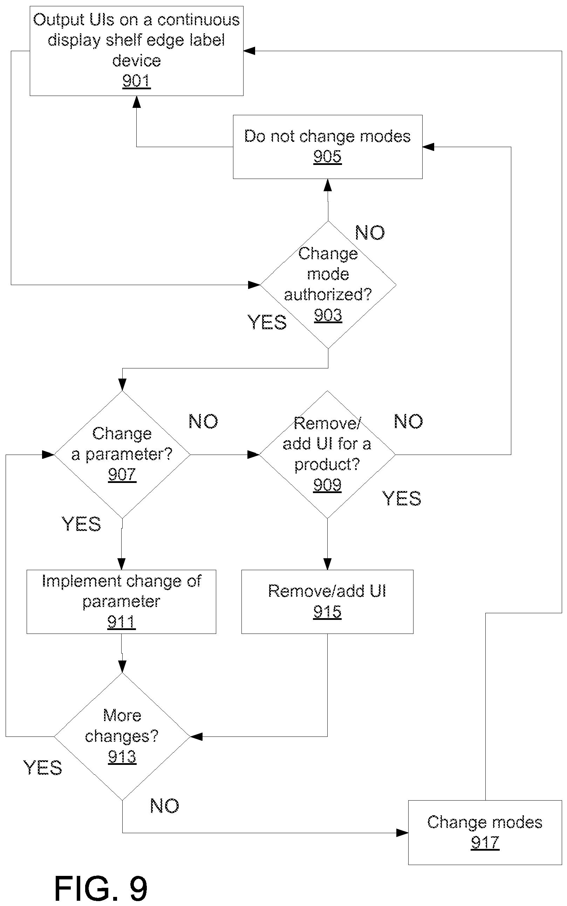

FIG. 9 illustrates an example method of distributing content according to one or more illustrative aspects of the invention. In one example, one or more of the steps of FIG. 9 may be implemented by computing device 100 in FIG. 1 and/or a device shown in FIGS. 2A-8B. The process starts and at step 901 a continuous display shelf edge label device outputs, via a single continuous display, two or more user interfaces, each user interface corresponding to a product being offered for sale. Such an example is shown in FIG. 3. Proceeding to step 903 a determination is made as to whether a change of mode of the continuous display shelf edge label device has been authorized. Such an example may be a worker inserting placing her finger at biometric scanner 503B in FIG. 5B and having the system realize that she is authorized to change the mode of operation of the continuous display shelf edge label device.

If the change of mode of operation is not authorized in step 903, the process moves to step 905 where there is no instruction to change the mode of operation and the process returns to step 901 to output, via the single continuous display, two or more user interfaces, each user interface corresponding to a product being offered for sale. If the change of mode of operation is authorized in step 903, the process moves to step 907 where an additional determination is made. In step 907 a determination is made as to whether a change of parameter input has been received. An illustrative example of a change of parameter is shown with respect to FIGS. 6A and 6B, FIGS. 7A and 7B, and/or FIGS. 8A and 8B. If there is not change of parameter input received, the process moves to step 909. If a change of parameter input is received in step 907, the process move to step 911 where the change of parameter, such as increasing the size of text of a user interface, is implemented on the requested user interface. The process then proceeds to step 913.

Returning to step 909, a further determination is made as to whether an input has been received to remove and/or add a user interface for a product. Such an illustrative example is shown with the removal of user interface 415 from FIG. 4A to FIG. 4B. If no input has been received in step 909, the process may return to step 905 and further may exit from a change mode of operation to a display mode of operation before returning to step 901. If an input is received in step 909, the process moves to step 915 where the user interface that the input applies to is either added or removed based upon the input. The process then proceeds to step 913.

In step 913 a determination is made as to whether additional changes in the change mode of operation are requested. If there are additional changes requested, the process may return to step 907. If additional changes are not requested, the process proceeds to step 917. In step 917, operation of the continuous display shelf edge label device from a change mode of operation to a display mode of operation occurs before returning to step 901 to output, via the single continuous display, two or more user interfaces, each user interface corresponding to a product being offered for sale and in accordance with any changes that may have been implemented.

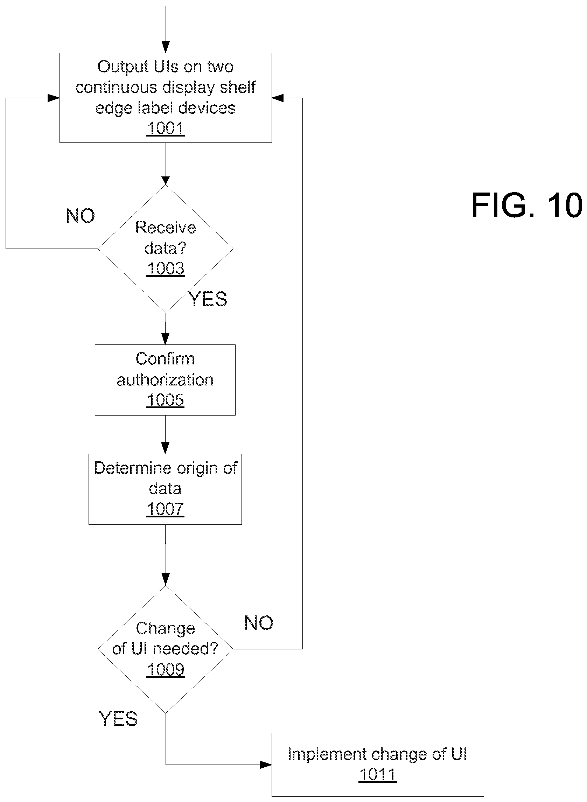

FIG. 10 illustrates another example method of distributing content according to one or more illustrative aspects of the invention. In one example, one or more of the steps of FIG. 10 may be implemented by computing device 100 in FIG. 1 and/or a device shown in FIGS. 2A-8B. The process starts and at step 1001 two continuous display shelf edge label devices each outputs, via a single continuous display, two or more user interfaces, each user interface corresponding to a product being offered for sale. Such an example is shown in FIG. 2B. Proceeding to step 1003, a determination is made as to whether data is being received by one of the continuous display shelf edge label devices. If not, the process may return to step 1001. If data is being received in step 1003, the process moves to step 1005.

In step 1005 the continuous display shelf edge label device confirms the authorization of the data. For example, the system may confirm that the data being received is for the continuous display shelf edge label device. If the data is a global transmission from a database, such as database 223 in FIG. 2A, the continuous display shelf edge label device may determine that the data being received in step 1003 is not intended for the continuous display shelf edge label device. Upon confirming the authorization of the data in step 1005, the process moves to step 1007 where the origin of the data may be determined. For example, the continuous display shelf edge label device may determine that the data is being received locally from a wireless communication received from a scanner, such as scanner 221 in FIG. 2A. In another example, the continuous display shelf edge label device may determine that the data is being received remotely from a wired communication received from a user terminal, such as user terminal 227 through main hub 225 and network 210 in FIG. 2A.

Moving to step 1009, a determination may be made as to whether a change to one or more user interfaces currently being outputted, via a single continuous display, by the continuous display shelf edge label device is needed. For example, if the data received in step 1003 and confirmed as applying to the continuous display shelf edge label device in step 1005 may include a change in price of a product associated with a user interface being outputted. If no change is needed in step 1009, the process may return to step 1001. If a change to one or more user interfaces currently being outputted, via the single continuous display, by the continuous display shelf edge label device is needed in step 1009, the process moves to step 1011 where the one or more changes to one or more user interfaces currently being outputted, via the single continuous display, by the continuous display shelf edge label device is implemented. Thereafter, the process may return to step 1001 where the two continuous display shelf edge label devices each outputs, via a single continuous display, two or more user interfaces, each user interface corresponding to a product being offered for sale, where each user interface of the continuous display shelf edge label device that received data in step 1003 outputs one or more user interfaces in accordance with any changes that may have been implemented in step 1011.

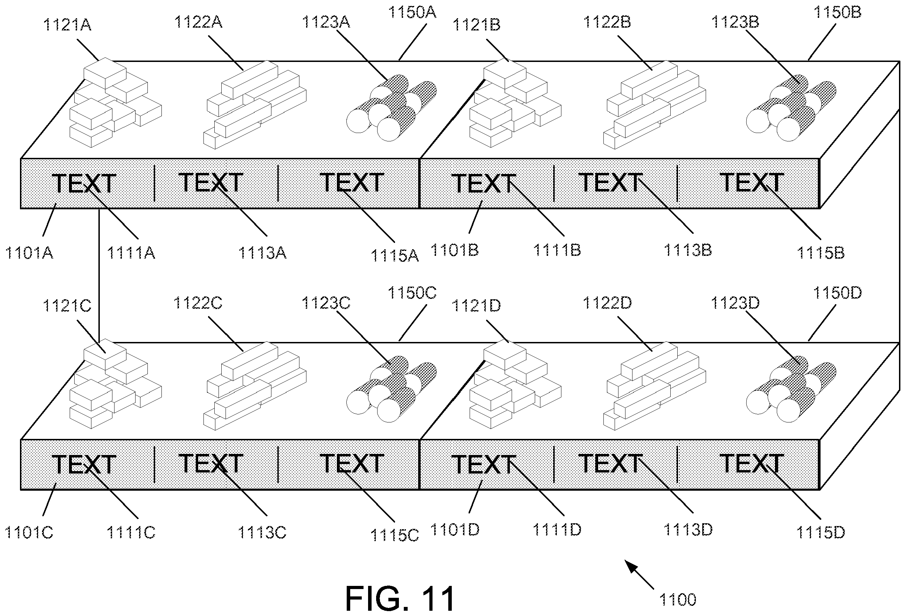

FIG. 11 illustrates an example block diagram of a system for communicating and distributing content according to one or more illustrative aspects of the invention. In one example, one or more of the components of FIG. 11 may be implemented by computing device 100 in FIG. 1 and/or one or more of devices shown in FIGS. 2A-10. In this example, a system 1100 of multiple continuous display shelf edge label devices are shown in operation together. In this example, there are four continuous display shelf edge label devices. Each continuous display shelf edge label device includes a single display area 1101A-1101D oriented along an entire edge of a shelf 1150A-1150D. Further in this example, shelves 1150A-D each hold a first product 1121A-1121D, a second product 1123A-D, and a third product 1125A-D, respectively. Single continuous displays 1101A-D each includes three digital user interfaces, one for each respective product being offered for sale. User interfaces 1111A-D provide information about first product 1121A-D directly above the user interface 1111A-D, respectively. Similarly, user interfaces 1113A-D and 1115A-D provide information about second product 1123A-D and third product 1125A-D, respectively, that are above the respective user interfaces 1113A-D, 1115A-D.

In accordance with one or more aspects of the present invention, the various continuous display shelf edge label devices could operate in unison for providing additional information to a customer. By having the continuous display shelf edge label devices arranged in side by side (1101A and 1101B or 1101C and 1101D) orientation and stacked on top of each other like shelves (1101A and 1101C or 1101B and 1101D), an array of continuous display shelf edge label devices may be configured. In the illustrative example of FIG. 11, there are four continuous display shelf edge label devices arranged as an array of 2x2, two rows and two columns of continuous display shelf edge label devices. Any of a number of additional arrangements may be made, including, but not limited to 4x1, 3x4, 3x3, and 4x4 configurations.

By configuring various continuous display shelf edge label devices to operate together, a retailer may utilize the displays to attract customers in any of a number of desired manners. Such configurations may be utilized to promote a single product, a single type of product, a single brand name, and the like. Animations and/or graphics may be implemented that span across multiple continuous display shelf edge label devices. Different outputs on the displays of the continuous display shelf edge label devices may be implemented based upon detecting the presence of a customer at an aisle, near a particular continuous display shelf edge label device, and/or at some other location in a retailer store. As described herein, different display modes may be implemented depending on the desired result and/or effect.

In one such example, every 10-15 seconds the display on one or more continuous display shelf edge label devices may change what is outputted in some way. In still other examples, one or more continuous display shelf edge label devices may remain constant in a displayed output acting as a very vibrant billboard. Whether the displayed output is moving or serving as a more constant billboard, continuous display shelf edge label devices could operate together.

In one embodiment, a customer may see and be attracted to such changing displayed output or stationary displayed output from further away. The changing displayed output or stationary displayed output may be a first display mode of operation. In response, she may approach a shelf. As she approaches the shelf, one or more continuous display shelf edge label devices may sense her presence, such as by a proximity sensor, and may switch to another mode of display. In such an example, specific advertising for a product may appear, such as for a product associated with the continuous display shelf edge label devices. Such advertising may be a notice of the product being on sale. Once the customer is in front of a particular continuous display shelf edge label device for a given period of time, such as 3-5 seconds, the continuous display shelf edge label device may switch to yet another mode of display where SKU specific pricing and packaging information may appear under each product.

In still other illustrative embodiments, a continuous display shelf edge label device may operate with a pusher assembly that is included with a shelf on which the continuous display shelf edge label device is oriented. The pusher assembly may include a pusher configured to place pressure behind a stack of products and push the stack forward towards the front of the shelf when a product is removed from the stack. Such a pusher assembly may include one or more components to determine a position of the pusher with respect to some portion of the assembly. For example, the stack of products may be able to fit 10 products. Integrated in the pusher assembly may be a floor that includes a tracker component at each of the 10 positions that the pusher may be configured to operate with the product. As the pusher reaches a tracker component, data regarding the position of the pusher may be known and such data may be transmitted to the continuous display shelf edge label device.

Similarly, other data may be determined and transferred as needed as well. For example, a movement of the pusher with respect to the shelf and/or the pusher assembly may be determined. Such a determination may be based upon a position and may include a timer component for use in determining the movement. In addition, in still other examples, a rate of change in a product level of a product associated with the continuous display shelf edge label device may be determined. In such an example, a shelf originally stocked with 50 items of a product is determined to only have 15 items of the product remaining after a period of time, such as an hour, a notice may be sent to a worker of the retailer to restock the product on the shelf. Similarly, such data may be sent to a continuous display shelf edge label device for changing a user interface associated with the product. For the same example, having received the data regarding only 15 items of a product remaining, the user interface of the continuous display shelf edge label device may be configured to change information. In some examples, a flashing/blinking display output of "Final 15 Left In Stock!" may be displayed, or a display output may automatically lower the price on the user interface by 10%, or a display may flash/blink upon determining the presence of a worker in the area of the continuous display shelf edge label device. The continuous display shelf edge label device may sense the presence of a worker, such as by sensing a NFC enabled access card of the worker being within a sensing range of a sensor associated with and/or included within the continuous display shelf edge label device.

Other data may be communicated to and/or determined by a continuous display shelf edge label device from a pusher and/or a pusher assembly. For example, a continuous display shelf edge label device may be programmed with data about a product that it is associated with and/or may access such data from a local or remote source, such as database 223 in FIG. 2A. In one example, the product may have an expiration data. For example, the product may be milk and the particular products on the shelf for sale may all have a same expiration date. A threshold may be established to track the number of milk items remaining against the expiration date in order to move the milk items off of the shelf, whether to customers or for newer milk items with later expiration dates. In one scenario, the system may lower the price of the milk as the time until the expiration date is met lowers to a threshold. If the expiration date is a week away, the continuous display shelf edge label device may output a price for the milk of $2. When the expiration date is 4 days away, the price may be reduced by 10% or dropped in price by $0.25. Should some milk remain when the expiration date is 2 days away, the price may be reduced by 50% or dropped in price by $1. In still other scenarios, as the expiration date approaches a threshold, notice may be provided in some manner to a worker for the retailer. The worker may receive a text or email, a notice on a handheld scanner, and/or in some other manner that the milk needs to be replaced or may soon need to be replaced.

Other illustrative information about a product may be communicated to and/or determined by a continuous display shelf edge label device from a pusher and/or a pusher assembly as well. Such examples include determining the amount of product remaining for another product and changing a user interface of the continuous display shelf edge label device in response. For example, a continuous display shelf edge label device may determine or receive data from another continuous display shelf edge label device about a competitive product and/or related product (such as toothpastes to toothbrushes). Utilizing such data, the continuous display shelf edge label device may change a user interface for a product associated with it, such as the price of the product, accordingly. In this manner, algorithms may be established for handling when and under what circumstances a price change may occur automatically at the continuous display shelf edge label device. The continuous display shelf edge label device may access a remote source for authorization to do so and/or make the determination itself that the user interface for a product should be changed. Accordingly, a price reduction may occur for a product if it is determined that a competitor's product is moving off a shelf in a much quicker manner than the product is moving.

Variations and modifications of the foregoing may be within the scope of the present invention as limited by the scope of the appended claims. The various features described above may be rearranged, combined, subdivided, omitted, and/or altered in any desired manner for example, features of the computing device described herein (which may be one the devices illustrated in FIG. 1) can be subdivided among multiple processors and computing devices.

## Claims

1. An apparatus (300) comprising:
at least one processor (101);
a touch screen display (301), configured to be oriented along an edge of a shelf (350) of a retailer, preferably along the entire edge of the shelf (350) of the retailer, the touch screen display (301) configured to:
provide a first user interface (311), the first user interface (311) including first information about a first product (321) on the shelf (350),
provide at least one second user interface (313), the at least one second user interface (313) including at least one second information about at least one second product (323) on the shelf (350), and
permit an individual by touching the touch screen display (301) to edit a parameter of at least one of: the first user interface (311) and the at least one second user interface (313), said parameter including at least one of: a size on the touch screen display (301), a shape on the touch screen display (301), and a location on the touch screen display (301);
a locking mechanism (303) configured to allow an individual to change modes of operation of the apparatus (300), the apparatus (300) configured to operate in at least a first mode of operation permitting a first individual to edit said parameter and a second mode of operation preventing a second individual from editing said parameter, and
at least one memory (101) storing computer executable instructions that, when executed by the at least one processor (101), cause the at least one processor (101) to output, to the touch screen display (301), the first information about the first product (321) on the shelf (350) and the at least one second information about the at least one second product (323) on the shelf (350) concurrently.

2. The apparatus (300) of claim 1, wherein:
the touch screen display (301, 501D) is further configured to provide a third user interface (503E) including the locking mechanism (303, 503D) and allowing an individual to change modes of operation of the apparatus (300) through the third user interface (503).

3. The apparatus (300) of claim 1, wherein
the locking mechanism (303, 503D) is configured to change modes of operation of the apparatus (300) based upon an identification of an individual as an individual authorized to edit said parameter.

4. The apparatus (300) of claim 1, further comprising a communication interface (109) configured to receive data representative of the first information about the first product (321) on the shelf (350).

5. The apparatus (300) of claim 4, wherein:
the communication interface (109) is a scanner interface configured to receive the data representative of the first information about the first product (321) on the shelf (350) from a hand scanner of the individual.

6. The apparatus of claim 4, wherein the communication interface (109) is a network interface configured to receive the data representative of the first information about the first product (321) of the shelf (350) from a network (110) of the retailer.

7. The apparatus (300) of claim 6, wherein the network interface is a wireless network interface and the network (110) of the retailer is a wireless network.

8. The apparatus (300) of claim 6, wherein the data representative of the first information about the first product (321) on the shelf (350) is received from a device configured to be oriented along an edge of a second shelf of the retailer.

9. The apparatus (300) of claim 1, wherein:
the touch screen display (301) is further is configured to:
permit the individual to remove the first user interface (311), and
permit the individual to provide a third user interface (503), the third user interface (503) including third information about a third product (325) on the shelf (350); and
the computer executable instructions, when executed by the at least one processor (101), further cause the at least one processor (101) to output, to the touch screen display (301), the third information about the third product (325) on the shelf (350) and the at least one second information about the at least one second product (323) on the shelf (350) concurrently.

10. The apparatus (300) of claim 1, further comprising:
a pusher assembly, oriented along a top of the shelf (350) of the retailer, including a pusher,
wherein the computer executable instructions, when executed by the at least one processor (101), further cause the at least one processor (101) to receive data regarding a position of the pusher and to determine a movement of the pusher and a rate of change in a product level of the first product or the at least one second product.

11. A method comprising:
providing, on a touch screen display (301) configured to be oriented along an edge of a shelf (350) of a retailer, a first user interface (311), the first user interface (311) including first information about a first product (321) on the shelf (350);
providing, on the touch screen display (301), at least one second user interface (313), the at least one second user interface (313) including at least one second information about at least one second product (323) on the shelf (350);
permitting, through the touch screen display (301), an individual to edit a parameter by touching the touch screen display (301) of at least one of: the first user interface (311) and the at least one second user interface (313), the parameter including at least one of: a size on the touch screen display (301), a shape on the touch screen display (301), and a location on the touch screen display (301);
providing a locking mechanism (303) configured to allow an individual to change modes of operation of the apparatus (300), the apparatus (300) configured to operate in at least a first mode of operation permitting a first individual to edit said parameter and a second mode of operation preventing a second individual from editing said parameter; and
outputting, to the touch screen display (301), the first information about the first product (321) on the shelf (350) and the at least one second information about the at least one second product (323) on the shelf (350) concurrently.

12. The method of claim 11, wherein, the method further comprising:
providing, on the touch screen display (301), a third user interface (503E) including a locking mechanism (303, 503D), and allowing an individual to change modes of operation of the apparatus (300) through the third user interface (503)

13. The method of claim 11, further comprising providing a locking mechanism (303, 503D) configured to change modes of operation of the apparatus (300) based upon an identification of an individual as an individual authorized to edit said parameter.

14. The method of claim 11, further comprising receiving, through a communication interface, data representative of the first information about the first product (321) on the shelf (350).

## Patentansprüche

1. Vorrichtung (300), die aufweist:
wenigstens einen Prozessor (101);
eine Berührungsbildschirmanzeige (301), die konfiguriert ist, um entlang einer Kante eines Regals (350) eines Einzelhändlers, vorzugsweise entlang der gesamten Kante des Regals (350) des Einzelhändlers, ausgerichtet zu werden, wobei die Berührungsbildschirmanzeige (301) konfiguriert ist, um:
eine erste Benutzerschnittstelle (311) bereitzustellen, wobei die erste Benutzerschnittstelle (311) erste Informationen über ein erstes Produkt (321) auf dem Regal (350) umfasst,
wenigstens eine zweite Benutzerschnittstelle (313) bereitzustellen, wobei die wenigstens eine zweite Benutzerschnittstelle (313) wenigstens eine zweite Information über wenigstens ein zweites Produkt (323) auf dem Regal (350) umfasst, und
einer Einzelperson zu erlauben, durch Berühren der Berührungsbildschirmanzeige (301) einen Parameter wenigstens einer der Folgenden zu editieren: der ersten Benutzerschnittstelle (311) und der wenigstens einen zweiten Benutzerschnittstelle (313), wobei der Parameter wenigstens eines der Folgenden umfasst: eine Größe auf der Berührungsbildschirmanzeige (301), eine Form auf der Berührungsbildschirmanzeige (301) und eine Stelle auf der Berührungsbildschirmanzeige (301);
einen Sperrmechanismus (303), der konfiguriert ist, um es einer Einzelperson zu erlauben, Betriebsarten der Vorrichtung (300) zu ändern, wobei die Vorrichtung (300) konfiguriert ist, um wenigstens in einer ersten Betriebsart, die es einer ersten Einzelperson erlaubt, den Parameter zu editieren, und einer zweiten Betriebsart, die verhindert, dass eine zweite Einzelperson den Parameter editiert, zu arbeiten, und
wenigstens einen Speicher (101), der computerausführbare Anweisungen speichert, die, wenn sie von dem wenigstens einen Prozessor (101) ausgeführt werden, bewirken, dass der wenigstens eine Prozessor (101) gleichzeitig die ersten Informationen über das erste Produkt (321) auf dem Regal (350) und die wenigstens eine zweite Information über das wenigstens eine zweite Produkt (323) auf dem Regal (350) an die Berührungsbildschirmanzeige (301) ausgibt.

2. Vorrichtung (300) nach Anspruch 1, wobei:
die Berührungsbildschirmanzeige (301, 501D) ferner konfiguriert ist, um eine dritte Benutzerschnittstelle (503E) bereitzustellen, die den Sperrmechanismus (303, 503D) umfasst und es einer Einzelperson erlaubt, die Betriebsarten der Vorrichtung (300) durch die dritte Benutzerschnittstelle (503) zu ändern.

3. Vorrichtung (300) nach Anspruch 1, wobei
der Sperrmechanismus (303, 503D) konfiguriert ist, um Betriebsarten der Vorrichtung (300) basierend auf einer Identifikation einer Einzelperson als eine Einzelperson, die berechtigt ist, den Parameter zu editieren, zu ändern.

4. Vorrichtung (300) nach Anspruch 1, die ferner eine Kommunikationsschnittstelle (109) aufweist, die konfiguriert ist, um Daten zu empfangen, welche die ersten Informationen über das erste Produkt (321) auf dem Regal (350) darstellen.

5. Vorrichtung (300) nach Anspruch 4, wobei:
die Kommunikationsschnittstelle (109) eine Scannerschnittstelle ist, die konfiguriert ist, um die Daten, welche die ersten Informationen über das erste Produkt (321) auf dem Regal (350) darstellen, von einem Handscanner der Einzelperson zu empfangen.

6. Vorrichtung (300) nach Anspruch 4, wobei die Kommunikationsschnittstelle (109) eine Netzwerkschnittstelle ist, die konfiguriert ist, um die Daten, welche die ersten Informationen über das erste Produkt (321) auf dem Regal (350) darstellen, von einem Netzwerk (110) des Einzelhändlers zu empfangen.

7. Vorrichtung (300) nach Anspruch 6, wobei die Netzwerkschnittstelle eine drahtlose Netzwerkschnittstelle ist und das Netzwerk (110) des Einzelhändlers ein drahtloses Netzwerk ist.

8. Vorrichtung (300) nach Anspruch 6, wobei die Daten, welche die ersten Informationen über das erste Produkt (321) auf dem Regal (350) darstellen, von einer Vorrichtung empfangen werden, die konfiguriert ist, um entlang einer Kante eines zweiten Regals des Einzelhändlers ausgerichtet zu werden.

9. Vorrichtung (300) nach Anspruch 1, wobei:
die Berührungsbildschirmanzeige (301) ferner konfiguriert ist, um:
der Einzelperson zu erlauben, die erste Benutzerschnittstelle (311) zu entfernen, und
der Einzelperson zu erlauben, eine dritte Benutzerschnittstelle (503) bereitzustellen, wobei die dritte Benutzerschnittstelle (503) dritte Informationen über ein drittes Produkt (325) auf dem Regal (350) umfasst; und
die computerausführbaren Anweisungen, wenn sie von dem wenigstens einen Prozessor (101) ausgeführt werden, ferner bewirken, dass der wenigstens eine Prozessor (101) gleichzeitig die dritten Informationen über das dritte Produkt (325) auf dem Regal (350) und die wenigstens eine zweite Information über das wenigstens eine zweite Produkt (323) auf dem Regal (350) an die Berührungsbildschirmanzeige (301) ausgibt.

10. Vorrichtung (300) nach Anspruch 1, die ferner aufweist:
eine Schieberanordnung, die entlang einer Oberseite des Regals (350) des Einzelhändlers ausgerichtet ist, die einen Schieber umfasst,
wobei die computerausführbaren Anweisungen, wenn sie von dem wenigstens einen Prozessor (101) ausgeführt werden, ferner bewirken, dass der wenigstens eine Prozessor (101) Daten bezüglich einer Position des Schiebers empfängt und eine Bewegung des Schiebers und eine Änderungsgeschwindigkeit in einer Produkthöhe des ersten Produkts oder des wenigstens einen zweiten Produkts bestimmt.

11. Verfahren, das aufweist:
Bereitstellen einer ersten Benutzerschnittstelle (311) auf einer Berührungsbildschirmanzeige (301), die konfiguriert ist, um entlang einer Kante eines Regals (350) eines Einzelhändlers ausgerichtet zu werden, wobei die erste Benutzerschnittstelle (311) erste Informationen über ein erstes Produkt (321) auf dem Regal (350) umfasst;
Bereitstellen wenigstens einer zweiten Benutzerschnittstelle (313) auf der Berührungsbildschirmanzeige (301), wobei die wenigstens eine zweite Benutzerschnittstelle (313) wenigstens eine zweite Information über wenigstens ein zweites Produkt (323) auf dem Regal (350) umfasst;
über die Berührungsbildschirmanzeige (301) Erlauben, dass eine Einzelperson durch Berühren der Berührungsbildschirmanzeige (301) einen Parameter wenigstens einer der Folgenden editiert: der ersten Benutzerschnittstelle (311) und der wenigstens einen zweiten Benutzerschnittstelle (313), wobei der Parameter wenigstens eines der Folgenden umfasst: eine Größe auf der Berührungsbildschirmanzeige (301), eine Form auf der Berührungsbildschirmanzeige (301) und eine Stelle auf der Berührungsbildschirmanzeige (301);
Bereitstellen eines Sperrmechanismus (303), der konfiguriert ist, um es einer Einzelperson zu erlauben, Betriebsarten der Vorrichtung (300) zu ändern, wobei die Vorrichtung (300) konfiguriert ist, um wenigstens in einer ersten Betriebsart, die es einer ersten Einzelperson erlaubt, den Parameter zu editieren, und einer zweiten Betriebsart, die verhindert, dass eine zweite Einzelperson den Parameter editiert, zu arbeiten, und
gleichzeitiges Ausgeben der ersten Informationen über das erste Produkt (321) auf dem Regal (350) und der wenigstens einen zweiten Information über das wenigstens eine zweite Produkt (323) auf dem Regal (350) an die Berührungsbildschirmanzeige (301).

12. Verfahren nach Anspruch 11, wobei das Verfahren ferner aufweist:
Bereitstellen einer dritten Benutzerschnittstelle (503E), die einen Sperrmechanismus (303, 503D) umfasst, auf der Berührungsbildschirmanzeige (301), und Erlauben, dass eine Einzelperson Betriebsarten der Vorrichtung (300) durch die dritte Benutzerschnittstelle (503) ändert.

13. Verfahren nach Anspruch 11, das ferner das Bereitstellen eines Sperrmechanismus (303, 503D) aufweist, der konfiguriert ist, um Betriebsarten der Vorrichtung (300) basierend auf einer Identifikation einer Einzelperson als eine Einzelperson, die berechtigt ist, den Parameter zu editieren, zu ändern.

14. Verfahren nach Anspruch 11, das ferner das Empfangen von Daten, welche die ersten Informationen über das erste Produkt (321) auf dem Regal (350) darstellen, durch eine Kommunikationsschnittstelle (109) aufweist.

## Revendications

1. Dispositif (300) comprenant :
au moins un processeur (101) ;
un écran d'affichage tactile (301), configuré pour être orienté le long d'une bordure d'une étagère (350) d'un magasin de vente au détail, de préférence le long de toute la bordure de l'étagère (350) du magasin de vente au détail, l'écran d'affichage tactile (301) étant configuré pour :
fournir une première interface utilisateur (311), la première interface utilisateur (311) incluant des premières informations concernant un premier produit (321) sur l'étagère (350),
fournir au moins une deuxième interface utilisateur (313), la au moins une deuxième interface utilisateur (313) incluant au moins des deuxièmes informations concernant au moins un deuxième produit (323) sur l'étagère (350), et
permettre à une personne d'éditer, en touchant l'écran d'affichage tactile (301), un paramètre d'au moins une interface parmi : la première interface utilisateur (311) et la au moins une deuxième interface utilisateur (313), ledit paramètre incluant au moins une caractéristique parmi : une taille sur l'écran d'affichage tactile (301), une forme sur l'écran d'affichage tactile (301), et une position sur l'écran d'affichage tactile (301) ;
un mécanisme de verrouillage (303) configuré pour permettre à une personne de permuter les modes de fonctionnement du dispositif (300), le dispositif (300) étant configuré pour fonctionner dans au moins un premier mode de fonctionnement permettant à une première personne d'éditer ledit paramètre et un deuxième mode de fonctionnement empêchant une deuxième personne d'éditer ledit paramètre, et
au moins une mémoire (101) stockant des instructions exécutables par ordinateur qui, lorsqu'elles sont exécutées par le au moins un processeur (101), amènent le au moins un processeur (101) à délivrer, sur l'écran d'affichage tactile (301), les premières informations concernant le premier produit (321) sur l'étagère (350) et les au moins deuxièmes informations concernant le au moins un deuxième produit (323) sur l'étagère (350) de manière simultanée.

2. Dispositif (300) selon la revendication 1, dans lequel :
l'écran d'affichage tactile (301, 501D) est en outre configuré pour fournir une troisième interface utilisateur (503E) incluant le mécanisme de verrouillage (303, 503D) et permettant à une personne de permuter les modes de fonctionnement du dispositif (300) par le biais de la troisième interface utilisateur (503).

3. Dispositif (300) selon la revendication 1, dans lequel
le mécanisme de verrouillage (303, 503D) est configuré pour permuter les modes de fonctionnement du dispositif (300) sur la base d'une identification d'une personne comme étant une personne autorisée à éditer ledit paramètre.

4. Dispositif (300) selon la revendication 1, comprenant en outre une interface de communication (109) configurée pour recevoir des données représentatives des premières informations concernant le premier produit (321) sur l'étagère (350).

5. Dispositif (300) selon la revendication 4, dans lequel :
l'interface de communication (109) est une interface de dispositif de balayage configurée pour recevoir les données représentatives des premières informations concernant le premier produit (321) sur l'étagère (350) émanant d'un dispositif de balayage manuel de la personne.

6. Dispositif selon la revendication 4, dans lequel l'interface de communication (109) est une interface de réseau configurée pour recevoir les données représentatives des premières informations concernant le premier produit (321) sur l'étagère (350) émanant d'un réseau (110) du magasin de vente au détail.

7. Dispositif (300) selon la revendication 6, dans lequel l'interface de réseau est une interface de réseau sans fil et le réseau (110) du magasin de vente au détail est un réseau sans fil.

8. Dispositif (300) selon la revendication 6, dans lequel les données représentatives des premières informations concernant le premier produit (321) sur l'étagère (350) sont reçues d'un dispositif configuré pour être orienté le long d'une bordure d'une deuxième étagère du magasin de vente au détail.

9. Dispositif (300) selon la revendication 1, dans lequel :
l'écran d'affichage tactile (301) est en outre configuré pour :
permettre à la personne de retirer la première interface utilisateur (311), et
permettre à la personne de prévoir une troisième interface utilisateur (503), la troisième interface utilisateur (503) incluant des troisièmes informations concernant un troisième produit (325) sur l'étagère (350) ; et
les instructions exécutables par ordinateur, lorsqu'elles sont exécutées par le au moins un processeur (101), amènent en outre le au moins un processeur (101) à délivrer, sur l'écran d'affichage tactile (301), les troisièmes informations concernant le troisième produit (325) sur l'étagère (350) et les au moins deuxièmes informations concernant le au moins un deuxième produit (323) sur l'étagère (350) de manière simultanée.

10. Dispositif (300) selon la revendication 1, comprenant en outre :
un ensemble de poussoir, orienté le long d'une partie supérieure de l'étagère (350) du magasin de vente au détail, incluant un poussoir,
où les instructions exécutables par ordinateur, lorsqu'elles sont exécutées par le au moins un processeur (101), amènent en outre le au moins un processeur (101) à recevoir des données concernant une position du poussoir et à déterminer un déplacement du poussoir et un taux de variation du stock produit du premier produit ou du au moins un deuxième produit.

11. Procédé comprenant :
le fait de fournir, sur un écran d'affichage tactile (301) configuré pour être orienté le long d'une bordure d'une étagère (350) d'un magasin de vente au détail, une première interface utilisateur (311), la première interface utilisateur (311) incluant des premières informations concernant un premier produit (321) sur l'étagère (350) ;
le fait de fournir, sur l'écran d'affichage tactile (301), au moins une deuxième interface utilisateur (313), la au moins une deuxième interface utilisateur (313) incluant au moins des deuxièmes informations concernant au moins un deuxième produit (323) sur l'étagère (350) ;
le fait de permettre, grâce à l'écran d'affichage tactile (301), à une personne d'éditer, en touchant l'écran d'affichage tactile (301), un paramètre d'au moins une interface parmi : la première interface utilisateur (311) et la au moins une deuxième interface utilisateur (313), le paramètre incluant au moins une caractéristique parmi : une taille sur l'écran d'affichage tactile (301), une forme sur l'écran d'affichage tactile (301), et une position sur l'écran d'affichage tactile (301) ;
le fait de fournir un mécanisme de verrouillage (303) configuré pour permettre à une personne de permuter les modes de fonctionnement du dispositif (300), le dispositif (300) étant configuré pour fonctionner dans au moins un premier mode de fonctionnement permettant à une première personne d'éditer ledit paramètre et un deuxième mode de fonctionnement empêchant une deuxième personne d'éditer ledit paramètre ; et
le fait de délivrer, sur l'écran d'affichage tactile (301), les premières informations concernant le premier produit (321) sur l'étagère (350) et les au moins deuxièmes informations concernant le au moins un deuxième produit (323) sur l'étagère (350) de manière simultanée.

12. Procédé selon la revendication 11, le procédé comprenant en outre :
le fait de fournir, sur l'écran d'affichage tactile (301), une troisième interface utilisateur (503E) incluant un mécanisme de verrouillage (303, 503D), et permettant à une personne de permuter les modes de fonctionnement du dispositif (300) par le biais de la troisième interface utilisateur (503).

13. Procédé selon la revendication 11, comprenant en outre le fait de fournir un mécanisme de verrouillage (303, 503D) configuré pour permuter les modes de fonctionnement du dispositif (300) sur la base d'une identification d'une personne comme étant une personne autorisée à éditer ledit paramètre.

14. Procédé selon la revendication 11, comprenant en outre le fait de recevoir, par le biais d'une interface de communication, des données représentatives des premières informations concernant le premier produit (321) sur l'étagère (350).
